# EUROPEAN PATENT SPECIFICATION

(11) **EP 0 397 991 B1**
(45) Date of publication and mention of the grant of the patent: **11.09.1996**
(21) Application number: 90105343.9
(22) Date of filing: 21.03.1990
(51) Int. Cl.: G06F 9/44

(54) **"C" program block annotator**
"C"-Programmblockannotierer
Annotateur de blocs de programme "C"

(30) Priority: 27.03.1989 US 328650
(43) Date of publication of application: 22.11.1990
(73) Proprietor: Bull HN Information Systems Inc., Billerica, MA 01821-4186 (US)
(72) Inventor: Gusenius, Delmar J., Glendale, Arizona 85308 (US)
(74) Representative: Altenburg, Udo, Dipl.-Phys.

(56) References cited:
- EP-A- 0 245 750
- OUTPUT, vol. 15, no. 6, 6th June 1986, pages 53-62, Goldbach, CH; P. EISNER: "Strukturierte Wartung von Cobol-Software"
- PROCEEDINGS OF THE CONFERENCE ON SOFTWARE MAINTENANCE, Phoenix, Arizona, 24th - 27th October 1988, pages 66-73; L.D. LANDIS et al.: "Documentation in a software maintenance enviroment"

## Description

### Field of the Invention

This invention relates to the art of computer programming and, more particularly, to a programming annotation tool which improves the comprehensibility of the source code listing of a program written in "C".

### Background of the Invention

As notoriously well known to those skilled in the art of computer programming, it is difficult to follow the structure and flow of a program from a study of the source code listing. Even in a review of one's own work, difficulties may be encountered if the program was written in the past such that its "philosophy" is not fresh in mind. But, it is particularly difficult to undertake the study of a source code listing of a program written partly or wholly by another person or persons since each programmer has his or her own style and thought process in writing programs. Further, it is a perhaps unfortunate fact that (because of productivity demands or even because of poor discipline) programs are no longer routinely subject to higher level documentation, such as by the preparation of detailed flow charts; consequently, the difficulty of following one's own program, let alone the work of others, is additionally aggravated.

The analysis of multiple levels of "nested" computing structures of information in programming languages is a well known problem in the art which can be tackled and resolved in different ways. The usual way to differentiate among nested structures is by use of delimiters which indicate the beginning and end of each nested structure. In practice it is very difficult for anyone to read and comprehend different nesting levels quickly. From the European patent application EP-A-0245750 it is known to distinguish between nested expressions, functions, logic segments or other text by using a different color for each nesting level in the display. A color display device is then necessary.

Viewing such a display is still not quite satisfactory mainly because of the appearance of an abundance of different colors in the text sequence making it confusing to the viewer to discern the actual nesting level depth which is arbitrarily associated with different colors according to a predetermined definition. However, due to the arbitrary color association, the viewer is irritated in seeing the many different colors which, although marking different nesting levels, fail to indicate the nesting level depth in a concise and easy to follow presentation.

One highly regarded programming language in wide use among both professional and amateur programmers is "C". Well written "C" programs often frequently employ code blocks which may be "nested" to several levels, and it is troublesome, when examining a source code listing which may have been prepared in the past or by others, to determine the beginnings and ends of the code blocks and the levels of nesting. Those skilled in the art will appreciate that it would be highly desirable to provide, in a "C" source code listing, annotations which will assist the peruser of such in following the code blocking and nesting structure of the listed program, and it is to these ends that my invention is directed.

### Objects of the Invention

It is therefore a broad object of my invention to provide an annotation tool for source code listings to facilitate following the structure and sequence of a listed program.

It is another object of my invention to provide such a tool which is particularly applicable to employment in conjunction with listings in "C" source code.

It is a more specific object of my invention to provide an annotation tool for "C" source code listings which visually identifies each code block and the nesting relationship among all code blocks in a concise and easy to follow presentation.

### Summary of the Invention

Briefly, these and other objects of the invention are achieved by a programming tool for providing a graphical representation of the relationships among a plurality of nested blocks integrated into a processed "C" source code listing by first selecting a little used character (such as a tilde "~") in the source code language to be employed as a tabbing character and then substituting a dedicated string into the source code for the selected character selected. Next, for each line of code including a start of block "{" character, a tilde and an outbound arrow (which can be simulated by a hyphen followed by a "greater than" character) are appended. Similarly, for each line of code including an end of block "}" character, a tilde and an inbound arrow (which can be simulated by a "less than" character followed by a hyphen) are appended. Using the tilde as a tabbing character, the inbound and outbound arrows are tabbed into vertical alignment. Next, while sequentially examining the partly processed source code from the first line, a "depth number" is developed for each line now having an inbound or outbound arrow by performing a depth number increment when a line having an outbound arrow is encountered and performing a depth number decrement for the starting depth number value of the next line when a given line having an inbound arrow is encountered. The depth numbers, and also one or more (as indicated by the depth number for a given line) right justified vertical line segments, are appended to the lines having outbound or inbound arrows. Intermediate lines have appended the same number of vertical line segments as the last arrowed line if it was outbound or one less than the last arrowed line if it was inbound. Then, horizontal line segment characters are entered in the spaces between the depth number and the leftmost vertical line segment in a given line having an outbound or inbound arrow. Preferably, for best visual appearance and clarity, the horizontal characters entered between the depth number and the leftmost vertical line segment in lines having outbound arrows are hyphen characters, and the horizontal characters entered between the depth number and the leftmost vertical line segment in lines having outbound arrows are underscore characters.

### Description of the Drawing

The subject matter of the invention is particularly pointed out and distinctly claimed in the concluding portion of the specification. The invention, however, both as to organization and method of operation, may best be understood by reference to the following description taken in conjunction with the subjoined claims and the accompanying drawing of which:
FIG. 1 is an exemplary brief "C" source code listing as it normally appears;
FIG. 2 is a flow chart illustrating the sequence of processing the "C" program of FIG. 1 through a first phase of the subject blocker program;
FIG. 3 is a flow chart illustrating the sequence of processing the "C" program of FIG. 1 through a second phase of the subject blocker program;
FIG. 4 is a flow chart illustrating the sequence of processing the "C" program of FIG. 1 through a third phase of the subject blocker program; and
FIG. 5 is a listing of the "C" program of FIG. 1 after it has been processed by the subject blocker program to provide the sought after code block identification and nesting annotations.

### Detailed Description of the Invention

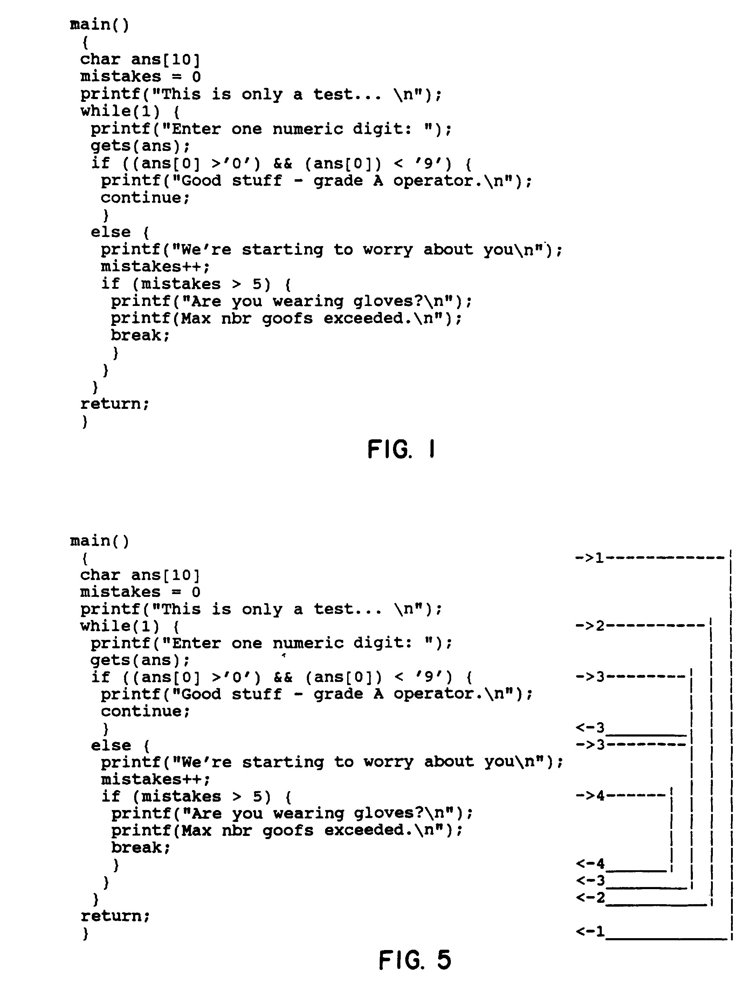

Referring to FIG. 1, a simple, exemplary "C" program is listed in source code. While elementary, this program employs several code blocks and several layers of nesting such that it is not at all easy to follow upon first inspection, particularly if the program has been written by another or sufficiently in the past that the peruser/programmer has forgotten his/her approach to writing the program. It is therefore desirable to process the exemplary program in accordance with the subject program blocker invention.

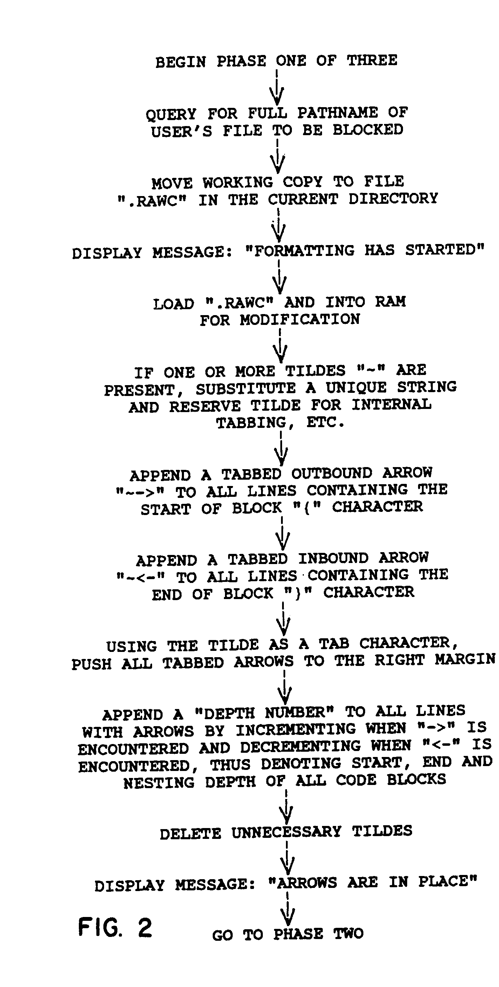

The program blocker invention, in its presently preferred embodiment, has a three pass structure, and FIG. 2 is a flow chart of Phase One. On beginning the blocker program, a query is presented for the full pathname of the "C" program to be blocked; i.e., its present location in storage. A working copy of the "C" program is obtained (in read-only mode for safety) and stored in file ".rawc." in the current directory; i.e., the directory in which the subject blocker program is located. The file .rawc. is then loaded into random access memory ("RAM") to begin the actual processing, and a message "FORMATTING HAS STARTED" is displayed.

Each line of the "C" program source code is examined in turn. If a tilde "~" is present in one or more instances, a unique string of characters (selected to represent the tilde) is substituted for each occurrence. This permits the tilde itself to be reserved for internal tabbing, etc. during execution of the blocker program as will become more clear below. Those skilled in "C" programming will understand that the tilde is one of the least used operators in "C" and was selected for that reason in the example; however, any other seldom used operator could be selected for the special purpose requirement in the subject blocker program.

Each line is then examined for the presence of the "{" character which indicates "start of block" in "C". If the "{" character is present in a given line, a tabbed outbound arrow "~->" (i.e., a tilde followed by a hyphen and a "greater than" character) is appended to that line. Similarly, each line is next examined for the presence of the "}" character which indicates "end of block", and if present, a tabbed inbound arrow "~<-" (a tilde followed by a "less than" character and a hyphen) is appended to that line. Then, interpreting each tilde as a tab character, the inbound and outbound arrows are pushed to the current right margin to establish a "beach head" at the right side.

Next, a "depth number" is appended to each line now having inbound and outbound arrows at the right margin. The depth number for each such line is obtained by performing a depth number increment when a line having an outbound arrow "->" is encountered and performing a depth number decrement for the starting depth number value of the next line when a given line having an inbound arrow "<-" is encountered. The depth numbers thus serve to denote the start, end and nesting depth of all the code blocks.

As a housekeeping function, the now unnecessary tildes are deleted. (It may be noted, however, that the tilde remains available for use in the blocker program since the selected unique string is still in place.) A message "ARROWS ARE IN PLACE" is then displayed, and Phase Two of the blocker program may be entered.

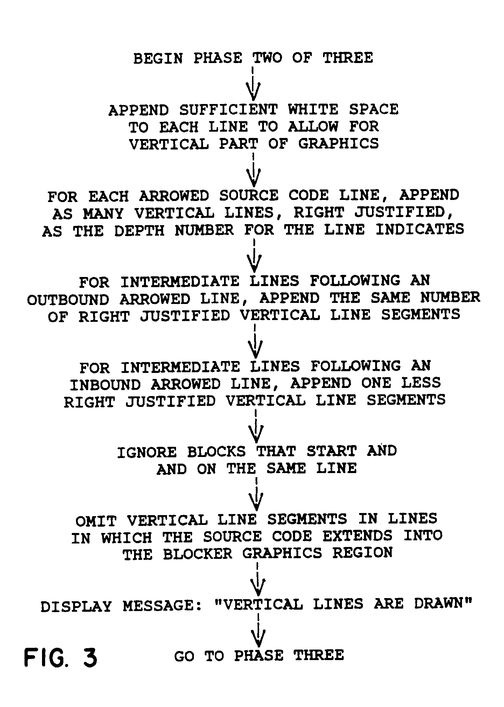

Referring to Fig. 3, there is appended to each line of code sufficient "white space" to accommodate the vertical part of the blocker graphics and, for arrowed lines, as many vertical line segments as the depth number indicates are appended. Intermediate lines have appended the same number of vertical line segments as the last arrowed line if it was outbound or one less than the last arrowed line if it was inbound. In the presently preferred embodiment, adjacent vertical lines are preferably separated by a blank space for aesthetic and clarity purposes For example, (assuming a maximum accommodation of seven deep nesting and at least two spaces between an arrow and a vertical line) if a line having an "->6" is examined, four spaces and six horizontally spaced vertical lines (separated by intervening single spaces) are appended. If the immediately following line has no arrow appended, it will also have four spaces and six horizontally spaced vertical lines appended. However, if the next line has an "<-5" entry, six spaces and five horizontally spaced vertical lines are appended. Thus, it is important to note that the group of vertical lines associated with each line of source code are oriented by this operation so that they are appended in a right justified manner whereby all vertical line segments are vertically aligned.. In this process, blocks which start and end on the same line are ignored. In addition, for unusually long lines of source code which extend into the area of the vertical graphics, no vertical lines are entered since the eye can readily follow the vertical flow of the graphics "through" such long lines.

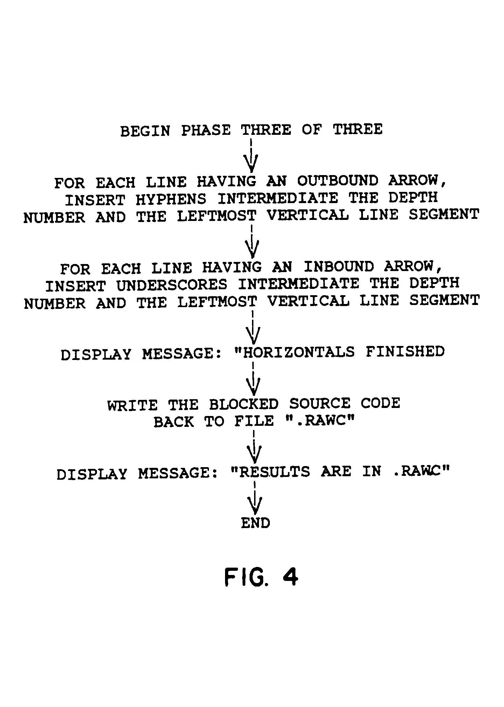

At this point, the message "VERTICALS LINES DRAWN" is displayed, the again unnecessary tildes are removed and Phase 3 of the blocker program is entered. The purpose of Phase 3, as will be apparent from Fig. 4, is to emplace the horizontal components of the blocker graphics. This task is readily achieved by employing a sufficient number of global replacement passes to equal twice the nesting depth accommodated (which is seven in the presently preferred embodiment). During the first series of global passes, the hyphen character is substituted for each space appearing between each outbound arrow and the first vertical line to its right. Then, the second series of global passes serves to replace each space appearing between each inbound arrow and the first vertical line to its right with an underscore character; i.e., "_". (The selection of the underscore character for this purpose is simply for improved appearance and clarity.) The message "HORIZONTALS ARE FINISHED" is then displayed, the blocked source code is stored back to file ".rawc", and a message to that effect ("OUTPUT IS WAITING IN .RAWC") is displayed.

The exemplary "C" source program illustrated in Fig. 1 may now be viewed as shown in Fig. 5 with the blocking graphics in place. Those skilled in the art will immediately recognize the dramatic improvement in clarity and comprehension which processing the listing through the subject blocker tool has obtained. It will also be apparent from a study of Fig. 5 why the vertical lines are, in effect, right justified; i.e., a given block at a given depth wraps to the right of the next higher numbered block and to the left of the next lower numbered block such that the block with depth number 1 has vertical lines at the rightmost position. This configuration tends to follow the "mental picture" which "C" programmers intuitively try to form in following code block relationships.

## Claims

1. Method of establishing a graphic display of the representation of nested blocks of source code in a computer program source code listing; said graphical representation being provided by a program processing apparatus which recognizes and interprets the source code characters which contain first and second unique characters ({,}) to indicate the beginning and the end of each block of said source code, said method being characterized by processing steps as follows:
A) in a first processing phase to provide depth numbers for denoting start, end and nesting depth of all code blocks by:
Aa) appending a tabbing character (∼) at the end of each line of the code listing which includes one of said first or second unique characters;
Ab) moving said tabbing characters into vertical alignment;
Ac) placing a number to the vertically aligned tab positions in an incrementing, respectively decrementing, sequence; said number being incremented starting with "1" if said line includes the first unique character ({) and decremented starting from the always reached nesting depth number if said line includes the second unique character (});
B) in a second processing phase to provide vertical line segment characters (|) in vertically aligned form adjacent to each line of the source code listing and adjusted with the "1"-line to a right boundary, wherein the quantity of said vertical line segment characters at said source code listing line is determined according to:
Bd) if said source code listing line is a numbered line, then said quantity equals said number, and said segment characters are equally spaced apart horizontally with the rightmost segment character being vertically aligned with said right boundary;
Be) if said source code listing line is an unnumbered line and the last-preceding numbered line includes the first unique character ({) said quantity equals said number of said last-preceding line, or
Bf) if said source code listing line is an unnumbered line and the last-preceding numbered line includes the second unique character (}) said quantity is one less than said number of said last-preceding line;
Bg) wherein the vertical line segment characters of steps Be-Bf are also equally spaced apart horizontally and adjusted to the right boundary in accordance with the quantity of segment characters of step Bd);
C) in a third processing phase to provide horizontal line segment characters (-,_)
Ch) to only the numbered lines by appending said horizontal line segment characters between said number in said line and the closest vertical line segment character.

2. The method of claim 1 characterized in that, in the first processing phase, there are appended
- an outbound arrow (->) adjacent said tabbing character (∼) in each line including said first unique character ({),
- and an inbound arrow (<-) adjacent said tabbing character (∼) in each line including said second unique character (}).

3. The method of claim 1 characterized in that the said first processing phase is preceded by steps as follows:
D) obtaining an unprocessed source code listing on display for being amended by said graphic display of the representation of said nested blocks;
E) selecting a rarely used character in the source code language to be employed as said tabbing character; and
F) substituting a dedicated string in the source code for the character selected in step E).

4. The method according to claim 1 in which the computer program source code listing is a "C" source code listing, the first unique character is the start of block character denoted by "{", and the second unique character is the end of block character denoted by "}".

5. The method of claims 2 and 3 in which:
- the character selected in step E) is a tilde "∼";
- the outbound arrow is simulated by a hyphen character followed by a ">" (greater than) character; and
- the inbound arrow is simulated by a "<" (less than) character followed by a hyphen character.

6. The method of claim 1 further characterized in that, in the third processing phase C), said horizontal line segment characters are different in lines which include said first unique character ({) than in lines which include said second unique character (}).

7. The method of claim 6 further characterized in that the horizontal line segment characters which are associated with said first unique character are hyphen characters (-), whereas those associated with said second unique characters are underscore characters (_).

## Patentansprüche

1. Verfahren zum Erstellen einer graphischen Anzeige der Darstellung verschachtelter Blöcke von Quellcode in einer Computerprogramm-Quellcode-Liste, wobei die graphische Darstellung durch eine Programmverarbeitungsvorrichtung bereitgestellt wird, welche die Quellcode-Zeichen, die erste und zweite eindeutige Zeichen ({,}) enthalten, erkennt und interpretiert, um den Beginn und das Ende jedes Blocks dieses Quellcodes anzuzeigen, wobei das Verfahren durch folgende Verarbeitungsschritte gekennzeichnet ist:
(A) in einer ersten Verarbeitungsphase Bereitstellen von Tiefen-Nummern zum Bezeichnen von Start, Ende und Verschachtelungstiefe aller Codeblöcke durch:
Aa) Anhängen eines Tabulatorzeichens (∼) am Ende jeder Zeile der Codeliste, die eines dieser ersten oder zweiten eindeutigen Zeichen enthält;
Ab) Verschieben der Tabulatorzeichen in vertikale Ausrichtung;
Ac) Anordnen einer Zahl zu den vertikal ausgerichteten Tabulatorpositionen in einer inkrementierenden bzw. dekrementierenden Folge; wobei diese Zahl beginnend mit "1" inkrementiert wird, wenn die Zeile das erste eindeutige Zeichen ({) enthält, und dekrementiert beginnend von der immer erreichten Verschachtelungstiefe-Zahl wird, wenn die Zeile das zweite eindeutige Zeichen (}) enthält;
B) in einer zweiten Verarbeitungsphase Bereitstellen von Vertikalstrich-Zeichen (|) in vertikal ausgerichteter Form neben jeder Zeile der Quellcode-Liste und ausgerichtet mit der "1"-Zeile zu einer rechten Grenze, worin der Mengenwert der Vertikalstrich-Zeichen in der Quellcode-Liste-Zeile bestimmt wird gemäß:
Bd) wenn die Quellcode-Liste-Zeile eine numierte Zeile ist, dann gleicht der Mengenwert dieser Nummer, und die Strichzeichen sind gleich weit horizontal voneinander entfernt, wobei das am weitesten rechts liegende Strichzeichen mit der rechten Grenze vertikal ausgerichtet ist;
Be) wenn die Quellcode-Liste-Zeile eine nicht numerierte Zeile ist und die unmittelbar vorangehende numerierte Zeile das erste einmalige Zeichen ({) enthält, gleicht der Mengenwert der Nummer der unmittelbar vorangehenden Zeile, oder
Bf) wenn die Quellcode-Liste-Zeile eine nicht numierte Zeile ist und die unmittelbar vorangehende numerierte Zeile das zweite eindeutige Zeichen (}) enthält, ist der Mengenwert um eins kleiner als die Nummer der unmittelbar vorangehenden Zeile;
Bg) wobei die Vertikalstrich-Zeichen der Schritte Be-Bf auch horizontal gleich weit voneinander entfernt sind und mit der rechten Grenze in Übereinstimmung mit der Anzahl von Strichzeichen von Schritt Bd ausgerichtet sind;
C) in einer dritten Verarbeitungsphase Bereitstellen von Horizontalstrich-Zeichen (-,_)
Ch) nur für die numerierten Zeilen durch Anhängen der Horizontalstrich-Zeichen zwischen der Nummer in der Zeile und dem nächsten Vertikalstrich-Zeichen.

2. Verfahren nach Anspruch 1, dadurch gekennzeichnet, daß in der ersten Verarbeitungsphase angehängt werden
- ein Rechtspfeil (->) neben dem Tabulatorzeichen (~) in jeder Zeile, die das erste eindeutige Zeichen ({) enthält,
- und ein Linkspfeil (<-) neben dem Tabulatorzeichen (-) in jeder Zeile, die das zweite eindeutige Zeichen (}) enthält.

3. Verfahren nach Anspruch 1, dadurch gekennzeichnet, daß der ersten Verarbeitungsphase folgende Schritte vorangehen:
D) Erhalten einer unverarbeiteten Quellcode-Liste auf der Anzeige, um durch die graphische Anzeige der Darstellung der verschachtelten Blöcke verbessert zu werden;
E) Auswählen eines selten benutzten Zeichens in der Quellcode-Sprache zur Verwendung als Tabulatorzeichen; und
F) Ersetzen eines reservierten Strings in dem Quellcode gegen das in Schritt E) ausgewählte Zeichen.

4. Verfahren nach Anspruch 1, bei dem die Computerprogramm-Quellcode-Liste eine "C"-Quellcode-Liste ist, das erste eindeutige Zeichen das Blockbeginn-Zeichen, bezeichnet durch "{" ist und das zweite eindeutige Zeichen das Blockende-Zeichen, bezeichnet durch "}" ist.

5. Verfahren nach den Ansprüchen 2 und 3, bei dem:
- das in Schritt E) ausgewählte Zeichen eine Tilde "∼" ist,
- der Rechtspfeil durch ein Bindestrich-Zeichen, gefolgt durch ein ">" (größer als)-Zeichen simuliert wird; und
- der Linkspfeil durch ein "<" (kleiner als)-Zeichen, gefolgt durch ein Bindestrich-Zeichen simuliert wird.

6. Verfahren nach Anspruch 1, weiterhin dadurch gekennzeichnet, daß in der dritten Verarbeitungsphase C) sich die Horizontalstrich-Zeichen in Zeilen, die das erste eindeutige Zeichen ({) enthalten, von denjenigen in Zeilen, die das zweite eindeutige Zeichen (}) enthalten, unterscheiden.

7. Verfahren nach Anspruch 6, weiterhin dadurch gekennzeichnet, daß die Horizontalstrich-Zeichen, die mit dem ersten eindeutigen Zeichen verbunden sind, Bindestrich-Zeichen (-) sind, wohingegen jene, die mit den zweiten eindeutigen Zeichen verbunden sind, Unterstrich-Zeichen (-) sind.

## Revendications

1. Procédé destiné à établir un affichage graphique de la représentation des blocs emboîtés de code source dans une liste de codes source de programme d'ordinateur ; ladite représentation graphique étant fournie par un appareil de traitement de programme qui reconnaît et interprète les caractères de code source qui contiennent des premier et second caractères uniques ({, }) pour indiquer le début et la fin de chaque bloc dudit code source, ledit procédé étant caractérisé par les étapes de traitement suivantes consistant à :
A) dans une première phase de traitement, fournir des numéros de profondeur pour marquer le départ, la fin et la profondeur d'emboîtement de tous les blocs de codes en :
Aa) ajoutant un caractère de tabulation (∼) à la fin de chaque ligne de la liste de codes qui comporte un desdits premier ou second caractères uniques ;
Ab) déplaçant lesdits caractères de tabulation dans un alignement vertical ;
Ac) plaçant un numéro sur les positions de tabulation alignées verticalement dans une séquence d'incrémentation, respectivement de décrémentation ; ledit numéro étant incrémenté en partant de " 1 " si ladite ligne comporte le premier caractère unique ({) et décrémenté en partant du numéro de profondeur d'emboîtement toujours atteint si ladite ligne comporte le second caractère unique (}) ;
B) dans une deuxième phase de traitement, fournir des caractères de segment de ligne verticaux (|) sous une forme alignée verticalement adjacents à chaque ligne de la liste de codes source et justifiés avec la ligne 1 sur la limite de droite, dans laquelle la quantité desdits caractères de segment de ligne verticaux à ladite ligne de la liste de codes sources est déterminée en fonction de ce qui suit :
Bd) si ladite ligne de la liste de codes source est une ligne numérotée, ladite quantité équivaut alors audit numéro et lesdits caractères de segment sont espacés de manière horizontale à intervalles égaux, le caractère de segment le plus à droite étant aligné verticalement avec ladite limite de droite ;
Be) si ladite ligne de la liste de codes source est une ligne non numérotée et que l'avant-dernière ligne numérotée comporte le premier caractère unique ({), ladite quantité équivaut audit numéro de l'avant-dernière ligne, ou
Bf) si ladite ligne de la liste de codes source est une ligne non numérotée et que l'avant-dernière ligne numérotée comporte le second caractère unique (}), ladite quantité équivaut audit numéro de ladite avant-dernière ligne moins un ;
Bg) dans laquelle les caractères de segment de ligne verticaux des étapes Be à Bf sont espacés à intervalles égaux de manière horizontale et justifiés sur la limite de droite conformément à la quantité de caractères de segment de l'étape Bd) ;
C) dans une troisième phase de traitement, fournir des caractères de segment de ligne horizontaux (-,_)
Ch) uniquement aux lignes numérotées en ajoutant lesdits caractères de segment de ligne horizontaux entre ledit numéro de ladite ligne et le caractère de segment de ligne vertical le plus proche.

2. Procédé selon la revendication 1, caractérisé en ce que, dans la première étape de traitement, sont ajoutés :
- une flèche vers la droite (→) adjacente audit caractère de tabulation (∼) dans chaque ligne comportant ledit premier caractère unique ({),
- et une flèche vers la gauche (←) adjacente audit caractère de tabulation (∼) dans chaque ligne comportant ledit second caractère unique (}).

3. Procédé selon la revendication 1, caractérisé en ce que ladite première phase de traitement est précédée des étapes suivantes consistant à :
D) obtenir à l'écran une liste de codes source non traitée afin qu'elle soit amendée par ledit affichage graphique de la représentation desdits blocs emboîtés ;
E) sélectionner un caractère rarement utilisé dans le langage des codes source de façon à l'employer comme ledit caractère de tabulation ; et
F) substituer une chaîne dédiée dans le code source par le caractère sélectionné à l'étape E).

4. Procédé selon la revendication 1, dans lequel la liste de codes source de programme d'ordinateur est une liste de codes source " C ", le premier caractère unique est le début du caractère de bloc symbolisé par " { ", et le second caractère unique est la fin du caractère de bloc symbolisée par " } ".

5. Procédé selon les revendications 2 et 3, dans lequel :
- le caractère sélectionné à l'étape E) est un tilde " ∼ " ;
- la flèche vers la droite est simulée par un trait d'union suivi du signe " > " (supérieur à) ; et
- la flèche vers la gauche est simulée par le signe " < " (inférieur à) suivi d'un trait d'union.

6. Procédé selon la revendication 1, caractérisé en outre en ce que, dans la troisième phase de traitement C), lesdits caractères de segment de ligne horizontaux sont différents dans les lignes qui comportent ledit premier caractère unique ({) que dans les lignes qui comportent ledit second caractère unique (}).

7. Procédé selon la revendication 6, caractérisé en outre en ce que les caractères de segment de ligne horizontaux qui sont associés audit premier caractère unique sont des traits d'union (-), tandis que ceux associés audit second caractère unique sont des traits de soulignement (_).
